# EUROPÄISCHE PATENTSCHRIFT

(11) **EP 2 867 058 B1**
(45) Veröffentlichungstag und Bekanntmachung des Hinweises auf die Patenterteilung: **24.07.2019**
(21) Anmeldenummer: 13732158.4
(22) Anmeldetag: 27.06.2013
(51) Int. Cl.: H01R 13/717, B60Q 1/00, H05B 33/08, B60L 53/16, B60L 53/30

(54) **LADEVORRICHTUNG ZUM LADEN EINES LADUNGSSPEICHERS**
CHARGING DEVICE FOR CHARGING A CHARGE STORAGE DEVICE
DISPOSITIF DE CHARGE POUR CHARGER UN ACCUMULATEUR DE CHARGE

(30) Priorität: 27.06.2012 DE 102012211048
(43) Veröffentlichungstag der Anmeldung: 06.05.2015
(73) Patentinhaber: Bayerische Motoren Werke Aktiengesellschaft, 80809 München (DE)
(72) Erfinder: SAID, Tarek, 82205 Gilching (DE)
(86) Internationale Anmeldenummer: PCT/EP2013/063553
(87) Internationale Veröffentlichungsnummer: WO 2014/001471

(56) Entgegenhaltungen:
- DE-A1-102010 008 334
- GB-A- 2 468 560
- JP-A- 2012 064 504
- US-A1- 2009 021 364
- US-A1- 2010 246 198
- Cars.com: "Charging the 2010 Tesla Roadster", , 13. Oktober 2010 (2010-10-13), XP054975292, Gefunden im Internet: URL:http://www.youtube.com/watch?v=KnNqMTK PfLA [gefunden am 2014-01-16]

## Beschreibung

Die Erfindung betrifft eine Ladevorrichtung zum Laden eines Ladungsspeichers, insbesondere eine Ladedose, sowie eine Steuervorrichtung zur Steuerung einer Beleuchtung der Ladevorrichtung. Des Weiteren betrifft die Erfindung ein System zum Laden eines Ladungsspeichers sowie ein mit einem derartigen System ausgestattetes Fahrzeug.

Elektromobilität gewinnt im Automobilbereich zunehmend an Bedeutung. Ein Elektrofahrzeug verfügt über einen Ladungsspeicher, der zum Aufladen über einen Stecker mit einer Versorgungsspannung verbunden wird. Zum Verbinden des Steckers mit dem Ladungsspeicher weist das Fahrzeug eine Ladevorrichtung mit einer Koppeleinrichtung zum Ankoppeln des Steckers auf. Die Ladevorrichtung kann als eine Ladedose, die unter einem Deckel verborgen ist, ausgebildet sein. Die Koppeleinrichtung zum Ankoppeln des Steckers befindet sich in der Ladedose. Die Koppeleinrichtung kann als eine Buchse ausgebildet sein, in die der Ladestecker zum Aufladen des Ladungsspeichers eingesteckt wird.

Im Unterschied zum Betanken eines Fahrzeugs mit Verbrennungsmotor, das üblicherweise an einer beleuchteten Tankstelle erfolgt, findet das Aufladen des Ladungsspeichers eines Elektrofahrzeugs im Allgemeinen in der eigenen Garage, in der die Beleuchtungsverhältnisse oft unzureichend sind, statt. Nach dem Aufklappen des Deckels der Ladevorrichtung ist die Koppeleinrichtung und ist insbesondere die geometrische Ausprägung der Buchse, in die der Ladestecker eingesteckt werden muss, oftmals schlecht zu erkennen. Der Ladevorgang des Fahrzeugs lässt sich während des Aufladevorgangs nicht wie beim Betanken des Fahrzeugs an einem Zähler ablesen oder durch ein akustisches Signal wahrnehmen.

Verschiedene Ausführungsformen von beleuchteten Ladevorrichtungen für Elektrofahrzeuge sind in den Druckschriften US 2010/0246198 A1, US 2009/0021364 A1, DE 10 2010 008 334 A1 und JP 2012-064504 A beschrieben.

Es ist wünschenswert, eine Ladevorrichtung zum Laden eines Ladungsspeichers anzugeben, bei der das Innere der Ladevorrichtung ausreichend beleuchtet ist und bei der der Ladezustand während des Aufladevorgangs angezeigt wird. Des Weiteren soll eine Steuervorrichtung zur Steuerung einer Beleuchtung der Ladevorrichtung angegeben werden. Ferner wird ein System zum Laden eines Ladungsspeichers angegeben.

Eine Ausführungsform der Ladevorrichtung zum Laden eines Ladungsspeichers ist im Patentanspruch 1 angegeben. Die Ladevorrichtung umfasst eine Koppeleinrichtung zum Ankoppeln eines Steckers zum Laden des Ladungsspeichers, einen Lichtleiter zum Beleuchten der Koppeleinrichtung und/oder zum Anzeigen eines Ladezustands des Ladungsspeichers sowie eine Lichtquelle zum Einkoppeln von Licht in den Lichtleiter. Der Lichtleiter weist eine Auskopplungsstruktur zum Auskoppeln von Licht aus dem Lichtleiter auf, wobei die ausgekoppelte Lichtleistung von der Form der Auskopplungsstruktur abhängig ist. Die Form der Auskopplungsstruktur ist an verschiedenen Positionen des Lichtleiters unterschiedlich.

Die Ladevorrichtung ist als eine Ladedose, die unter einem Abdeckelement beziehungsweise einer Ladeklappe zum Abdecken der Koppeleinrichtung angeordnet ist, ausgebildet. Die Ladedose umfasst einen Ladetopf, eine Blende, in der die Koppeleinrichtung angeordnet ist, den Lichtleiter und die Lichtquelle, die beispielsweise als eine Leuchtdiode (LED) ausgeführt sein kann. Der Lichtleiter ist beispielsweise C-förmig um den äußeren Rand der Blende geführt. Weiterhin weist die Ladedose ein Verblendelement zum Abdecken des Lichtleiters auf, wobei das Verblendelement an einem seitlichen Rand transparent und an einer oberen Seite lichtundurchlässig ist. Im Bereich des Scharniers des Abdeckelements kann der Lichtwellenleiter enden. Der Lichtleiter fungiert sowohl als Suchbeleuchtung wie auch als Kontrollleuchte für die jeweilige Anzeige des Ladestatus des Ladungsspeichers. Er strahlt als indirekte Lichtquelle aus dem seitlichen Rand in den Ladetopf. Der Lichtleiter kann am Rand des Ladetopfs derart angeordnet sein, dass das aus dem Lichtleiter austretende Licht nicht unmittelbar in den Straßenraum strahlt. Vorzugsweise ist der Lichtleiter derart in der Ladevorrichtung angeordnet, dass eine Sichtbarkeit des Lichtleiters aus der Hecksicht eines Fahrzeugs mit einem Winkel von 15° nicht gegeben ist.

Der Lichtleiter weist zwei seitliche Enden auf. An beiden seitlichen Enden des Lichtleiters sind Einkoppelstellen zum Einkoppeln von Licht in den Lichtleiter vorgesehen. An den Einkoppelstellen ist jeweils eine Lichtquelle, die als Leuchtdiode ausgebildet ist, angeordnet. Die LEDs an den Einkoppelstellen können RGB-LEDs sein, mit denen der komplette Farbraum dargestellt werden kann. Die Lichtquelle ist an den zwei Enden des Lichtleiters derart angeordnet, dass die Lichtquelle an der jeweiligen Einkoppelstelle Licht in den Lichtleiter einkoppelt.

Die Funktion des Lichtleiters als Suchbeleuchtung oder als Kontroll-/Anzeigeleuchte für den Status des Ladevorgangs beziehungsweise den Ladestatus des Ladungsspeichers kann von einer Steuervorrichtung gesteuert werden. Eine Ausführungsform einer Steuervorrichtung zur Steuerung einer Beleuchtung der Ladevorrichtung zum Laden des Ladungsspeichers ist im Patentanspruch 5 angegeben. In einem Fahrzeug kann die Steuervorrichtung beispielsweise das Lade-Interface-Modul umfassen.

In die Ladevorrichtung kann ein Hall-Geber integriert sein. Mittels des Hall-Gebers kann die Steuervorrichtung feststellen, ob die Ladeklappe geöffnet ist. Wenn die Steuervorrichtung das Öffnen der Ladeklappe festgestellt hat, steuert sie die Lichtquelle derart an, dass das Innere der Ladedose beispielsweise durch weißes, homogenes Licht als Suchbeleuchtung beleuchtet wird. Beim Anstecken des Ladesteckers erfolgen ein Erlöschen der Suchbeleuchtung und der Übergang des Lichtleiters in den (farbigen) Anzeige-/Kontroll-Modus. Während einer Validierungsphase, in der von der Steuervorrichtung das korrekte Ankoppeln des Ladesteckers an die Koppeleinrichtung der Ladedose überprüft wird, erhält ein Fahrzeughalter durch entsprechende Lichtsignale eine unterstützende Bedienrückmeldung für korrektes Aufstecken des Landesteckers. Eine farbige Anzeige des Validierungsvorgangs geht vorzugsweise der Anzeige des jeweiligen Ladestatus voran.

Wenn kein Ladestecker aufgesteckt wird, erlischt das homogene, beispielsweise weiße, Licht des Lichtleiters nach einer vorgegebenen Zeit, beispielsweise nach zwei Minuten. Die Suchbeleuchtung erlöscht vorzugsweise auch im Zustand "Fahrbereitschaft" des Elektrofahrzeugs beziehungsweise sie wird gar nicht erst aktiviert, falls sie sich bereits im deaktivierten Zustand befunden hat. Nachdem der Ladezustand nach dem Aufstecken des Ladesteckers mittels des Lichtleiters angezeigt wird und die Lichtquelle aktiv ist, erlischt das Anzeigelicht nach einer vorgegebenen Zeit, beispielsweise nach drei Minuten, da während dieser Zeit die Busruhe einsetzt und das Fahrzeug "einschläft". Wenn der Fahrzeughalter sein Fahrzeug, beispielsweise nach abgeschlossenem Ladevorgang, entriegelt, wird die Ladestatusanzeige wieder von der Steuervorrichtung aktiviert und zeigt in entsprechender Farbe und Lichtdynamik den aktuellen Ladestatus des Ladungsspeichers an. Auch dieser Zustand wird nach einer vorgegebenen Zeit, beispielsweise nach drei Minuten, wieder beendet.

Ein System zum Laden eines Ladungsspeichers ist im Patentanspruch 5 angegeben. Im Patentanspruch 6 ist ein Fahrzeug mit einem derartigen System angegeben.

Im Folgenden wird die Erfindung anhand von Figuren, die Ausführungsbeispiele der Erfindung zeigen, näher erläutert. Es zeigen:
- Figur 1: ein Fahrzeug mit einem System zum Laden eines Ladungsspeichers des Fahrzeugs,
- Figur 2A: eine Ausführungsform einer Ladevorrichtung zum Laden eines Ladungsspeichers in einer Draufsicht,
- Figur 2B: eine Ausführungsform einer Ladevorrichtung zum Laden eines Ladungsspeichers in einem Schnitt,
- Figur 3: eine Ausführungsform eines Lichtleiters einer Ladevorrichtung zum Laden eines Ladungsspeichers,
- Figur 4: eine Nichteinsehbarkeit des von einem Lichtleiter einer Ladevorrichtung zum Laden eines Ladungsspeichers erzeugten Lichts vom Heck eines Fahrzeugs.

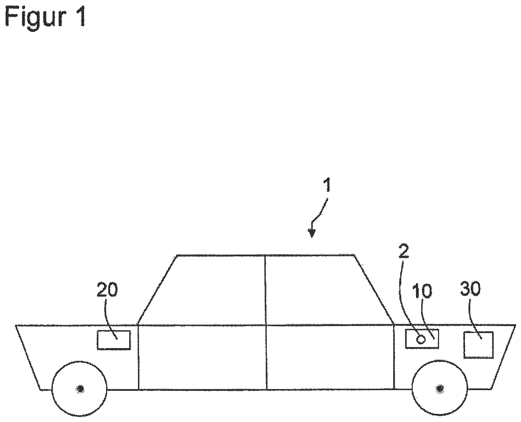

Figur 1 zeigt ein Fahrzeug 1 mit einem System zum Laden einer elektrischen Ladung in einem elektrischen Ladungsspeicher 30 des Fahrzeugs. Das System umfasst eine Ladevorrichtung 10 und eine Steuervorrichtung 20 zur Steuerung eines Ladens des Ladungsspeichers 30 des Fahrzeugs. Zum Laden des Ladungsspeichers 30 wird ein Ladestecker 2 an die Ladevorrichtung 10 angeschlossen.

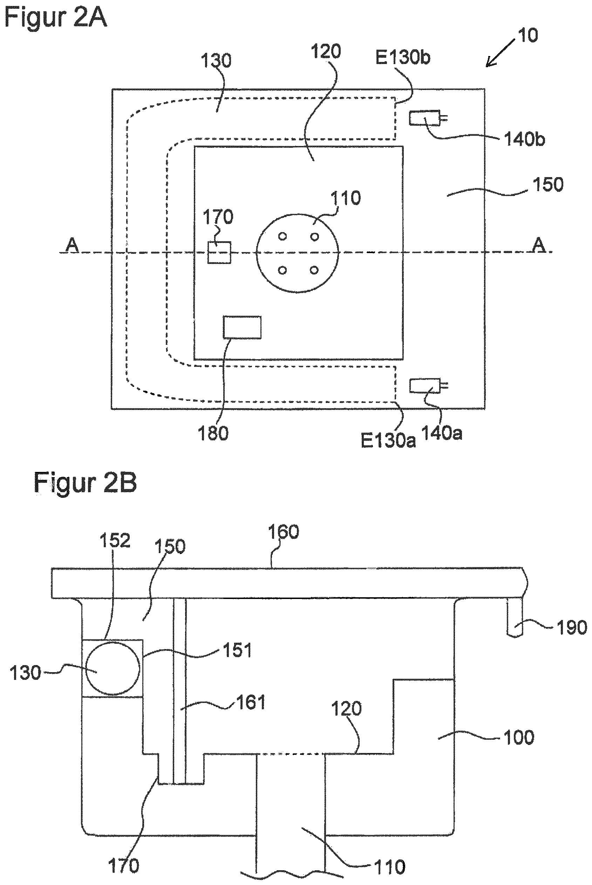

Figur 2A zeigt einen Schnitt auf eine Ausführungsform einer als Ladedose ausgebildeten Ladevorrichtung 10. Die Ladevorrichtung ist in Figur 2B im Querschnitt entlang der Schnittlinie A-A der Figur 2A dargestellt. Die Ladevorrichtung 10 kann als eine Ladedose mit einem Grundkörper 100, der topfförmig als ein Ladetopf ausgestaltet ist, ausgebildet sein. Die Ladevorrichtung umfasst eine Koppeleinrichtung 110 zum Ankoppeln des Steckers 2 an die Ladevorrichtung für den Aufladevorgang. Die Koppeleinrichtung 110 kann auf der Innenseite des Ladetopfs der Ladedose angeordnet sein. Die Koppeleinrichtung 110 kann als eine länderspezifische Steckervariante, beispielsweise eine Buchse, ausgebildet sein. Die Ladevorrichtung 10 umfasst ferner eine Blende 120, in der die Koppeleinrichtung 110 angeordnet ist. Mittels verschiedener Blenden können unterschiedliche Steckervarianten 110 in die Ladedose integriert werden, ohne dass dazu das Design der Ladedose geändert werden müsste.

Des Weiteren umfasst die Ladevorrichtung 10 einen Lichtleiter 130 zum Beleuchten der Koppeleinrichtung und/oder zum Anzeigen eines Ladezustands des Ladungsspeichers 30. Der Lichtleiter 130 kann C-förmig oder auch ringförmig um den äußeren Rand der Blende 120 angeordnet sein. Im Ausführungsbeispiel der Figur 2A ist der Lichtleiter bis auf eine Seite um sämtliche Seiten der Ladevorrichtung 10 entlang des Randes der Blende 120 geführt. Der Lichtleiter endet an der Seite der Ladedose, an der ein Abdeckelement 160 zum Verschließen der Ladedose mit einem Scharnier 190 angeordnet ist. Der Lichtleiter kann an einem Ende oder, wie bei der Ausführungsform der Figur 2A gezeigt, an beiden Enden E130a, E130b eine Einkoppelstelle zum Einkoppeln von Licht in den Lichtleiter aufweisen. An den beiden Enden können zum Einkoppeln von Licht in den Lichtleiter 130 Lichtquellen 140a, 140b angeordnet sein. Die Lichtquellen können beispielsweise als Leuchtdioden (LEDs) ausgebildet sein. Um den kompletten Farbraum darstellen zu können, werden vorzugsweise RGB-LEDs verwendet.

Der Lichtleiter 130 kann von einem Verblendelement 150 abgedeckt sein. Das Verblendelement kann an einem seitlichen Rand 151 in Richtung auf die Koppeleinrichtung 110 transparent und an einer oberen Seite 152 in Richtung auf das Abdeckelement 160 zum Verschließen der Ladedose lichtundurchlässig ausgebildet sein. Wenn die Lichtquellen 140a, 140b Licht an den Einkoppelstellen E130a, E130b in den Lichtleiter einkoppeln, strahlt der Lichtleiter somit als indirekte Lichtquelle Licht C-förmig aus dem seitlichen Rand des Verblendelements in den Ladetopf 100 beziehungsweise in Richtung der Koppeleinrichtung 110 ab.

Mittels des Abdeckelements 160 kann der Ladetopf der Ladedose verschlossen werden. In einem offenen Zustand ist die Koppeleinrichtung 110 von dem Abdeckelement 160 unbedeckt, während die Koppeleinrichtung in einem geschlossenen Zustand des Abdeckelements von dem Abdeckelement abgedeckt ist. Die Ladevorrichtung 10 kann des Weiteren eine Detektoreinrichtung 170 zum Detektieren des offenen oder geschlossenen Zustands des Abdeckelements 160 aufweisen. Die Detektoreinrichtung 170 kann als ein Hall-Geber ausgeführt sein. Durch Eingreifen eines in Figur 2B dargstellten Zapfens 161 des Abdeckelements in einen Verriegelungseinrichtung verändert sich ein Magnetfeld beim Öffnen oder Schließen des Abdeckelements. Der Hall-Geber kann in der Verriegelungseinrichtung angeordnet sein. Die Änderung des Magnetfeldes ist zum Feststellen des geöffneten oder geschlossenen Zustands des Abdeckelements von dem Hall-Geber 170 detektierbar. Die Lichtquelle 140a, 140b ist dazu ausgebildet, in Abhängigkeit von dem detektierten offenen oder geschlossenen Zustand des Abdeckelements 160 das in den Lichtleiter 130 eingekoppelte Licht zu verändern.

Des Weiteren kann die Ladevorrichtung einen Helligkeitssensor 180 zum Erfassen einer Helligkeit der Umgebung der Koppeleinrichtung 110 aufweisen, der in der Blende 120 angeordnet sein kann. Die Lichtquelle 140a, 140b ist dazu ausgebildet, in Abhängigkeit von der von dem Helligkeitssensor 180 erfassten Helligkeit das in den Lichtleiter 130 eingekoppelte Licht zu verändern.

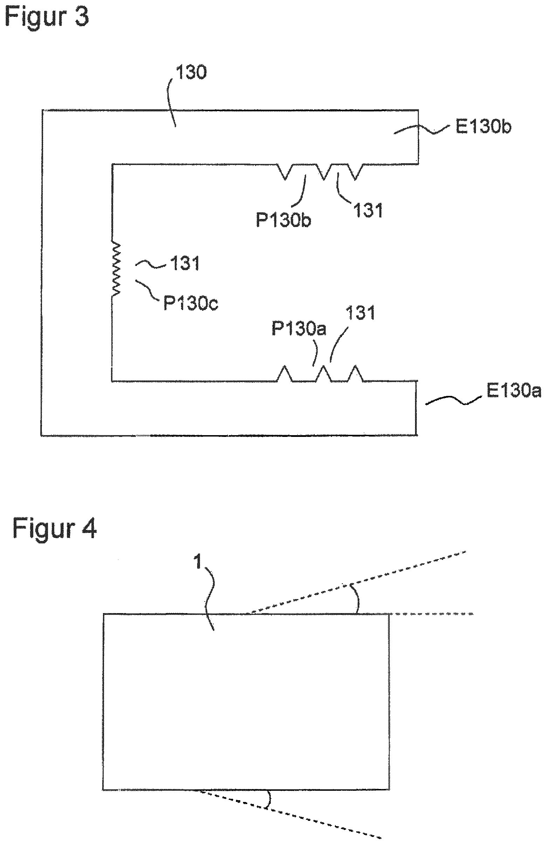

Figur 3 zeigt eine Ausführungsform des Lichtleiters 130, bei der entlang des Lichtleiters 130 eine Auskopplungsstruktur 131 zum Auskoppeln von Licht aus dem Lichtleiter vorgesehen ist. Die Form der Auskopplungsstruktur kann an verschiedenen Positionen P130a, P130b und P130c des Lichtleiters unterschiedlich sein. Die Auskopplungsstruktur 131 kann beispielsweise entlang des Lichtleiters 130 derart variieren, dass an den Positionen P130a, P130b im Bereich der Einkoppelstellen E130a, E130b weniger Licht ausgekoppelt wird als an der entfernter liegenden Position P130c. Dadurch ist gewährleistet, dass der Lichtleiter Licht nahezu homogen in den Ladetopf und somit in Richtung auf die Koppeleinrichtung abstrahlt.

Der Lichtleiter kann in der Ladevorrichtung 10 derart angeordnet sein, dass das von ihm emittierte Licht aus einem bestimmten Blickwinkel vom Heck des Fahrzeugs aus gesehen nicht sichtbar ist. Im Ausführungsbeispiel ist der Lichtleiter 130 und insbesondere das Verblendelement 150 derart ausgestaltet, dass die Sichtbarkeit des aus dem Lichtleiter entlang seines Verlaufs austretenden Lichts in einem Winkelbereich von 15° oder weniger als 15° vom Heck des Fahrzeugs aus gemessen nicht gegeben ist.

Im Folgenden wird eine Ansteuerung der Lichtquelle 140a, 140b zum Einkoppeln von Licht in den Lichtleiter während einer Vorbereitung des Ladevorgangs beschrieben. Die Ansteuerung der Lichtquelle erfolgt durch die Steuervorrichtung 20, die beispielsweise ein Lade-Interface-Modul des Fahrzeugs umfasst.

Zunächst wird von der Steuervorrichtung 20 festgestellt, ob das Abdeckelement 160 geöffnet worden ist. Das Öffnen des Abdeckelements ist beispielsweise mittels des Hall-Gebers 170 feststellbar. Wenn festgestellt worden ist, dass das Abdeckelement geöffnet ist, wird von der Steuervorrichtung 20 überprüft, ob sich das Fahrzeug im Zustand "Fahrbereitschaft" befindet. Der Zustand "Fahrbereitschaft" kennzeichnet bei einem mit einem Elektromotor getriebenen Fahrzeug, dass der Elektromotor unmittelbar zum Antreiben des Fahrzeugs startbereit ist. Wenn der Zustand "Fahrbereitschaft" festgestellt worden ist, wird die Lichtquelle 140a, 140b nicht aktiviert, wenn sie sich bereits im deaktivierten Zustand befindet. Wenn sich die Lichtquelle bereits in einem aktiven, lichtemittierenden Zustand befindet, deaktiviert die Steuervorrichtung die Lichtquelle wieder, so dass das aus dem Lichtleiter 130 abgestrahlte Licht erlischt.

Wenn sich das Fahrzeug nicht im Zustand "Fahrbereitschaft" befindet, überprüft die Steuervorrichtung 20, ob sich die Ladevorrichtung 10 in einem ersten Zustand oder einem zweiten Zustand befindet. Im ersten Zustand der Ladevorrichtung ist das Abdeckelement 160 geöffnet und der Stecker 2 ist noch nicht mit der Koppeleinrichtung 110 verbunden. Wenn dieser Zustand festgestellt wird, steuert die Steuervorrichtung 20 die Lichtquelle, beispielsweise die RGB-LEDs 140a, 140b derart an, dass die Lichtquelle ein homogenes, beispielsweise weißes Licht, in den Lichtleiter 130 einkoppelt. Der Lichtleiter 130 strahlt somit (weißes) Licht, das als Suchbeleuchtung zum Auffinden der Koppeleinrichtung 110 dient, in den Ladetopf 100.

In dem zweiten Zustand der Ladevorrichtung 10 ist das Abdeckelement 160 geöffnet und der Stecker 2 zum Aufladen des Ladungsspeichers 30 ist mit der Koppeleinrichtung 110 verbunden. In diesem Fall startet die Steuervorrichtung 20 einen Validierungsvorgang. Dabei wird beispielsweise überprüft, ob der Ladestecker 2 bestimmungsgemäß an die Koppeleinrichtung gekoppelt ist und ob die Voraussetzungen für den Ladevorgang gegeben sind. Während des Validierungsvorgangs steuert die Steuervorrichtung 20 die Lichtquelle 140a, 140b derart an, dass die Lichtquelle im Vergleich zu der Suchbeleuchtung das emittierte Licht verändert. Beispielweise werden die LEDs 140a, 140b derart angesteuert, dass sie während der Validierungsphase ein orangefarbenes Blinklicht in den Lichtleiter 130 einkoppeln.

Wenn während der Validierung von der Steuervorrichtung 20 ein Fehlerfall festgestellt wird, wird das von der Lichtquelle erzeugte Licht erneut verändert. Die Steuervorrichtung 20 steuert die Leuchtdioden 140a, 140b beispielsweise derart an, dass die Leuchtdioden ein rotes Blitzlicht, zum Beispiel dreimaliges Blitzen in Gruppen mit einem kurzen zeitlichen Abstand zwischen den Blitzlichtgruppen, in den Lichtleiter 130 einkoppeln.

Wenn während der Validierungsphase für den Ladevorgang kein Fehler festgestellt wird, wird der aktuelle Ladezustand des Ladungsspeichers 30 von der Steuervorrichtung 20 festgestellt. Der aktuelle Ladezustand wird durch entsprechende Lichtsignale optisch angezeigt, die in den Lichtleiter 130 eingekoppelt werden.

Nun kann entweder der eigentliche Ladevorgang beginnen oder das Fahrzeug befindet sich in einem Ladebereitschaftszustand, der von der Steuervorrichtung 20 erkannt wird. Wenn der Ladevorgang beginnt, wird von der Steuervorrichtung 20 der Ladezustand des Ladungsspeichers überwacht. Wenn sich das Fahrzeug im Ladevorgang befindet, steuert die Steuervorrichtung 20 die Lichtquelle 140a, 140b derart an, dass durch entsprechende Lichtsignale der Ladebereitschaftszustand für den Fahrzeughalter angezeigt wird. Beispielsweise steuert die Steuervorrichtung 20 die LEDs 140a, 140b derart an, dass die Lichtquelle ein Lichtsignal mit langsam zunehmender und langsam wieder abnehmender Helligkeit erzeugt und dieses Lichtsignal in den Lichtleiter einkoppelt.

Wenn von der Steuervorrichtung 20 festgestellt wird, dass der Ladungsspeicher 30 vollgeladen ist, steuert sie die Lichtquelle 140a, 140b mit entsprechenden Steuersignalen an, so dass die Lichtquelle 140a, 140b ein verändertes Lichtsignal erzeugt und in den Lichtleiter 130 einkoppelt. Beispielsweise können die LEDs Dauerlicht in den Lichtleiter einkoppeln, das entlang des Verlaufs des Lichtleiters aus diesem wieder ausgekoppelt wird. Nach einer gewissen Zeit deaktiviert die Steuervorrichtung 20 wieder die Lichtquelle 140a, 140b.

Im Ladebereitschaftszustand erfolgt das Aufladen des Ladungsspeichers 30 nicht sofort, sondern erst zu einem späteren Zeitpunkt. Der Ladestecker 2 wird beispielsweise am Tag bereits an die Koppeleinrichtung 110 angeschlossen, während der eigentliche Ladevorgang erst in der Nacht erfolgt.

Wenn sich das Fahrzeug im Ladebereitschaftszustand befindet, steuert die Steuervorrichtung 20 die Lichtquelle 140a, 140b derart an, dass durch entsprechende Lichtsignale der Ladebereitschaftszustand für den Fahrzeughalter angezeigt wird. Beispielsweise steuert die Steuervorrichtung 20 die LEDs 140a, 140b derart an, dass die Lichtquelle ein entsprechendes Lichtsignal erzeugt und dieses Lichtsignal in den Lichtleiter einkoppelt.

Nachdem der Ladezustand des Ladungsspeichers durch Emittieren von Licht entlang des Lichtleiters angezeigt worden ist, deaktiviert die Steuervorrichtung 20 die Lichtquelle nach einiger Zeit, beispielsweise nach drei Minuten wieder, da die Busruhe einsetzt und das Fahrzeug "einschläft". Während der Zeit des Ladens kann die Lichtquelle 140a, 140b nach Einsetzen der Busruhe oder Verriegeln deaktiviert sein.

Wenn ein Fahrer beispielsweise nach abgeschlossenem Ladevorgang sein Fahrzeug entriegelt, aktiviert die Steuervorrichtung 20 die Lichtquelle, so dass wieder Licht mit einer entsprechenden Farbe und Lichtdynamik aus dem Lichtleiter austritt. Das aus dem Lichtleiter austretende Lichtsignal kennzeichnet den aktuellen Ladezustand des Ladungsspeichers. Auch dieser Zustand kann nach einer vorbestimmten Zeit wieder beendet werden.

Durch die Verwendung eines Lichtleiters 130, in den nur an einem Ende oder an beiden Enden Licht durch jeweils eine Leuchtdiode eingekoppelt wird, können im Vergleich zur Verwendung einer Vielzahl von Leuchtdioden, die Kosten des Systems deutlich reduziert werden. Durch die Verwendung eines Lichtleiters zum Erzeugen der Suchbeleuchtung oder dem Anzeigen des Ladungsstatus wird darüber hinaus die Lichtaustrittsfläche erhöht, was zu einer stärkeren Wahrnehmbarkeit des Lichts führt. Aufgrund der vorzugsweise C-förmigen Gestaltung des Lichtleiters ist das abgestrahlte Licht aus nahezu allen Blickwinkeln wahrnehmbar. Die Suchbeleuchtungsfunktion ermöglicht ab dem Öffnen der Ladeklappe die Auffindbarkeit der Koppeleinrichtung auch bei Nacht. Während des Ladevorgangs wird zur besseren Differenzierbarkeit der Zustände neben der Lichtdynamik auch die Lichtfarbe für die Zustandskodierung genutzt. Die Lichtquelle 140a, 140b kann beispielsweise Licht mit verschiedenen Lichtfarben und/oder verschiedenen Helligkeiten und/oder verschiedenen Abfolgen von Lichtpulsen erzeugen und in den Lichtleiter 130 einkoppeln. Durch die Lichterscheinung kann der Ladevorgang inszeniert werden.

### Bezugszeichenliste

- 1: Fahrzeug
- 2: Ladestecker
- 10: Ladevorrichtung
- 20: Steuervorrichtung
- 30: Ladungsspeicher
- 100: Grundkörper, Ladedose, Ladetopf
- 110: Koppeleinrichtung (Stecker)
- 120: Blende
- 130: Lichtleiter
- 140: Lichtquelle (LED)
- 150: Verblendelement
- 151: transparente Seite des Verblendelements
- 152: lichtundurchsichtige Seite des Verblendelements
- 160: Abdeckelement
- 161: Zapfen des Abdeckelements
- 170: Detektoreinrichtung
- 180: Helligkeitssensor
- 190: Scharnier

## Patentansprüche

1. Ladedose zum Laden eines Ladungsspeichers, umfassend:
- eine Koppeleinrichtung (110) zum Ankoppeln eines Steckers (2) zum Laden des Ladungsspeichers (30),
- einen Lichtleiter (130) zum Beleuchten der Koppeleinrichtung (110) und/oder zum Anzeigen eines Ladezustands des Ladungsspeichers (30),
- eine Lichtquelle (140a, 140b) zum Einkoppeln von Licht in den Lichtleiter (130),
- eine Blende (120), in der die Koppeleinrichtung (110) angeordnet ist, wobei der Lichtleiter (130) entlang des Randes der Blende (120) C-förmig geführt ist,
- ein Verblendelement (150) zum Abdecken des Lichtleiters (130), wobei das Verblendelement (150) an einem seitlichen Rand (151) transparent und an einer oberen Seite (152) lichtundurchlässig ist,
- wobei der Lichtleiter (130) zwei seitliche Enden (E130a, E130b) aufweist und wobei der Lichtleiter (130) an den zwei seitlichen Enden (E130a, E130b) jeweils eine Einkoppelstelle zum Einkoppeln von Licht in den Lichtleiter (130) aufweist,
- wobei die Lichtquelle (140a, 140b) an den zwei Enden (E130a, E130b) des Lichtleiters (130) derart angeordnet ist, dass die Lichtquelle (140a, 140b) an der jeweiligen Einkoppelstelle Licht in den Lichtleiter (130) einkoppelt,
- wobei der Lichtleiter (130) eine Auskopplungsstruktur (131) zum Auskoppeln von Licht aus dem Lichtleiter (130) aufweist, wobei die ausgekoppelte Lichtleistung von der Form der Auskopplungsstruktur abhängig ist,
- wobei die Form der Auskopplungsstruktur (131) an verschiedenen Positionen (P130a, P130b, P130c) des Lichtleiters unterschiedlich ist.

2. Ladedose nach Anspruch 1, umfassend:
- ein Abdeckelement (160) zum Abdecken der Koppeleinrichtung (110), wobei die Koppeleinrichtung (110) in einem offenen Zustand des Abdeckelements (160) von dem Abdeckelement unbedeckt und in einem geschlossenen Zustand des Abdeckelements von dem Abdeckelement abgedeckt ist,
- eine Detektoreinrichtung (170), insbesondere ein Hall-Geber, zum Detektieren des offenen und geschlossenen Zustands des Abdeckelements (160),
- wobei die Lichtquelle (140a, 140b) dazu ausgebildet ist, in Abhängigkeit von dem von der Detektoreinrichtung (170) detektierten offenen oder geschlossenen Zustand des Abdeckelements (160) das in den Lichtleiter (130) eingekoppelte Licht zu verändern.

3. Ladedose nach einem der Ansprüche 1 oder 2, umfassend:
- einen Helligkeitssensor (180) zum Erfassen einer Helligkeit der Umgebung der Koppeleinrichtung (110),
- wobei die Lichtquelle (140a, 140b) dazu ausgebildet ist, in Abhängigkeit von der von dem Helligkeitssensor (180) erfassten Helligkeit das in den Lichtleiter (130) eingekoppelte Licht zu verändern.

4. Ladedose nach einem der Ansprüche 1 bis 3,
wobei die Lichtquelle (140a, 140b) dazu ausgebildet ist, Licht mit verschiedenen Lichtfarben und/oder verschiedenen Helligkeiten und/oder verschiedenen Abfolgen von Lichtpulsen zu erzeugen und in den Lichtleiter (130) einzukoppeln.

5. System zum Laden eines Ladungsspeichers, umfassend:
- eine Ladedose (10) zum Laden eines Ladungsspeichers (30) nach einem der Ansprüche 1 bis 4,
- eine Steuervorrichtung (20) zur Steuerung der Beleuchtung der Ladedose zum Laden des Ladungsspeichers nach einem der Ansprüche 1 bis 4
- wobei die Steuervorrichtung (20) dazu ausgebildet ist, festzustellen, ob die Ladedose (10) in einem ersten Zustand, in dem das Abdeckelement (160) geöffnet und der Stecker (2) nicht mit der Koppeleinrichtung (110) verbunden ist, oder in einem zweiten Zustand, in dem das Abdeckelement (160) geöffnet und der Stecker (2) zum Aufladen des Ladungsspeichers (30) mit der Koppeleinrichtung (110) verbunden ist, betrieben wird,
- wobei die Steuervorrichtung (20) die Lichtquelle (140a, 140b) der Ladedose (10) derart ansteuert, dass die Lichtquelle (140a, 140b) das in den Lichtleiter (130) der Ladedose einzukoppelnde Licht in Abhängigkeit davon, ob die Ladedose in dem ersten oder zweiten Zustand betrieben wird, verändert.

6. Fahrzeug, umfassend:
- einen Ladungsspeicher (30),
- ein System (10, 20) zum Laden des Ladungsspeichers (30) nach Anspruch 5.

7. Fahrzeug nach Anspruch 6,
- wobei die Steuervorrichtung (20) dazu ausgebildet ist, die Lichtquelle (140a, 140b) der Ladedose nach einer Zeit nach dem Einstecken des Steckers (2) in die Koppeleinrichtung (110) der Ladedose zu deaktivieren,
- wobei die Steuervorrichtung (20) dazu ausgebildet ist, die Lichtquelle (140a, 140b) zum Einkoppeln von Licht in den Lichtleiter (130) zu aktivieren, wenn das Fahrzeug entriegelt wird.

8. Fahrzeug nach einem der Ansprüche 6 oder 7,
- wobei die Steuervorrichtung (20) dazu ausgebildet ist, festzustellen, ob sich das Fahrzeug im fahrbereiten Zustand befindet,
- wobei die Steuervorrichtung (20) dazu ausgebildet ist, die Lichtquelle (140a, 140b) der Ladedose zu deaktivieren, wenn die Lichtquelle zum Einkoppeln von Licht in den Lichtleiter (130) aktiviert worden ist und sich das Fahrzeug im fahrbereiten Zustand befindet, oder die Lichtquelle im deaktivierten Zustand zu belassen, wenn sich die Lichtquelle (140a, 140b) bereits im deaktivierten Zustand befindet und sich das Fahrzeug im fahrbereiten Zustand befindet.

## Claims

1. A charging socket for charging a charge storage means, comprising:
- a coupling means (110) for coupling a plug (2) for charging the charge storage means (30),
- an optical waveguide (130) for illuminating the coupling means (110) and/or for indicating a state of charge of the charge storage means (30),
- a light source (140a, 140b) for coupling light into the optical waveguide (130),
- a faceplate (120), in which the coupling means (110) is arranged, wherein the optical waveguide (130) is guided in a C-shape along the edge of the faceplate (120),
- a screening element (150) for covering the optical waveguide (130), wherein the screening element (150) is transparent on a lateral edge (151) and impervious to light on an upper side (152),
- wherein the optical waveguide (130) has two lateral ends (E130a, E130b) and wherein the optical waveguide (130) has at the two lateral ends (E130a, E130b) in each case a coupling-in point for coupling light into the optical waveguide (130),
- wherein the light source (140a, 140b) is arranged at the two ends (E130a, E130b) of the optical waveguide (130) such that the light source (140a, 140b) couples light into the optical waveguide (130) at the respective coupling-in point,
- wherein the optical waveguide (130) has a coupling-out structure (131) for coupling light out of the optical waveguide (130), wherein the coupled-out light output is dependent on the shape of the coupling-out structure,
- wherein the shape of the coupling-out structure (131) is different at different positions (P130a, P130b, P130c) of the optical waveguide.

2. A charging socket according to Claim 1, comprising:
- a covering element (160) for covering the coupling means (110), the coupling means (110) in an open state of the covering element (160) not being covered by the covering element and in a closed state of the covering element being covered by the covering element,
- a detector means (170), especially a Hall-effect sensor, for detecting the open and closed state of the covering element (160),
- wherein the light source (140a, 140b) is designed to change the light coupled into the optical waveguide (130) dependent on the open or closed state of the covering element (160) detected by the detector means (170).

3. A charging socket according to one of Claims 1 or 2, comprising:
- a brightness sensor (180) for detecting a brightness of the surroundings of the coupling means (110),
- the light source (140a, 140b) being designed to change the light coupled into the optical waveguide (130) dependent on the brightness detected by the brightness sensor (180).

4. A charging socket according to one of Claims 1 to 3,
wherein the light source (140a, 140b) is designed to generate light with different colours of light and/or different brightnesses and/or different sequences of light pulses and to couple it into the optical waveguide (130).

5. A system for charging a charge storage means, comprising:
- a charging socket (10) for charging a charge storage means (30) according to one of Claims 1 to 4,
- a control device (20) for controlling the illumination of the charging socket for charging the charge storage means according to one of Claims 1 to 4,
- wherein the control device (20) is designed to establish whether the charging socket (10) in a first state, in which the covering element (160) is opened and the plug (2) is not connected to the covering means (110), or in a second state, in which the covering element (160) is opened and the plug (2) for charging the charge storage means (30) is connected to the coupling means (110), is operated,
- wherein the control device (20) controls the light source (140a, 140b) of the charging socket (10) such that the light source (140a, 140b) changes the light which is to be coupled into the optical waveguide (130) of the charging socket dependent on whether the charging socket is operated in the first or second state.

6. A vehicle, comprising:
- a charge storage means (30),
- a system (10, 20) for charging the charge storage means (30) according to Claim 5.

7. A vehicle according to Claim 6,
- wherein the control device (20) is designed to deactivate the light source (140a, 140b) of the charging socket after a time after the insertion of the plug (2) into the coupling means (110) of the charging socket,
- wherein the control device (20) is designed to activate the light source (140a, 140b) for coupling light into the optical waveguide (130) if the vehicle is unlocked.

8. A vehicle according to one of Claims 6 or 7,
- wherein the control device (20) is designed to ascertain whether the vehicle is in the state ready for use,
- wherein the control device (20) is designed to deactivate the light source (140a, 140b) of the charging socket if the light source has been activated for coupling light into the optical waveguide (130) and the vehicle is in the state ready for use, or to leave the light source in the deactivated state if the light source (140) is already in the deactivated state and the vehicle is in the state ready for use.

## Revendications

1. Boîtier de charge permettant de charger un accumulateur de charge comprenant :
- un dispositif de couplage (110) permettant de connecter une fiche (2) pour charger l'accumulateur de charge (30),
- une fibre optique (130) permettant d'éclairer le dispositif de couplage (110) et/ou d'indiquer l'état de charge de l'accumulateur de charge (30),
- une source de lumière (140a, 140b) permettant d'injecter de la lumière dans la fibre optique (130),
- un diaphragme (120) dans lequel est monté le dispositif de couplage (110), la fibre optique (130) étant guidée en forme de C le long du bord du diaphragme (120),
- un élément de masquage (150) permettant de recouvrir la fibre optique (130), l'élément de masquage (150) étant transparent sur un bord latéral (151) et imperméable à la lumière sur sa face supérieure (152),
- la fibre optique (130) ayant deux extrémités latérales (E130a, E130b) et comportant respectivement, à ses deux extrémités latérales (E130a, E130b) un emplacement de couplage permettant d'y injecter de la lumière,
- la source de lumière (140a, 140b) étant installée aux deux extrémités (E130a, E130b) de la fibre optique (130) de sorte qu'elle injecte respectivement de la lumière dans la fibre optique (130) au niveau des deux emplacements de couplage,
- la fibre optique (130) ayant une structure de découplage (131) permettant d'extraire de la lumière de la fibre optique (130), l'intensité de lumière découplée étant dépendante de la forme de la structure de découplage,
- la forme de la structure de découplage (131) étant différente au niveau de différents emplacements (P130a, P130b, P130c) de la fibre optique.

2. Boîtier de charge conforme à la revendication 1, comprenant :
- un élément de couverture (160) permettant de recouvrir le dispositif de couplage (110), le dispositif de couplage (110) n'étant pas recouvert par l'élément de couverture lorsque cet élément de couverture (160) est dans un état ouvert et étant recouvert par l'élément de couverture lorsque cet élément de couverture est dans un état fermé,
- un dispositif de détection (170), en particulier un émetteur à effet Hall permettant de détecter si l'élément de couverture (160) est à l'état ouvert ou à l'état fermé,
- la source de lumière (140a, 140b) étant réalisée de façon à permettre de modifier en fonction de l'état ouvert ou de l'état fermé de l'élément de couverture (160) détecté par le dispositif de détection (170) la lumière injectée dans la fibre optique (130).

3. Boîtier de charge conforme à l'une des revendications 1 et 2, comprenant :
- un capteur de luminosité (180) permettant de détecter la luminosité de l'environnement du dispositif de couplage (110),
- la source de lumière (140a, 140b) étant réalisée pour permettre de modifier la lumière injectée dans la fibre optique (130) en fonction de la luminosité détectée par le capteur de clarté (180).

4. Boîtier de charge conforme à l'une des revendications 1 à 3,
dans lequel la source de lumière (140a, 140b) est réalisée pour permettre de produire de la lumière ayant différentes couleurs et/ou différentes luminosités et/ou différentes successions d'impulsions lumineuses et de l'injecter dans la fibre optique (130).

5. Système permettant de charger un accumulateur de charge comprenant :
- un boîtier de charge (10) permettant de charger un accumulateur de charge (30) conforme à l'une des revendications 1 à 4,
- un dispositif de commande (20) permettant de commander l'éclairage du boîtier de charge permettant de charger l'accumulateur de charge conforme à l'une des revendications 1 à 4,
- le dispositif de commande (20) étant réalisé pour permettre de déterminer si le boîtier de charge (10) fonctionne dans un premier état dans lequel l'élément de couverture (160) est ouvert et la fiche (2) n'est pas commutée au dispositif de couplage (110) ou dans un second état dans lequel l'élément de couverture (160) est ouvert et la fiche (2) permettant de charger l'accumulateur de charge (30) est commutée au dispositif de couplage (110),
- le dispositif de commande (20) commandant la source de lumière (140a, 140b) du boîtier de charge (10) de façon que cette source de lumière (140a, 140b), modifie la lumière devant être injectée dans la fibre optique (130) du boîtier de charge en fonction du fait que le boîtier de charge fonctionne dans le premier état ou dans le second état.

6. Véhicule comprenant :
- un accumulateur de charge (30), et
- un système (10, 20) permettant de charger l'accumulateur de charge (30) conforme à la revendication 5.

7. Véhicule conforme à la revendication 6,
- dans lequel le dispositif de commande (20) est réalisé de façon à désactiver la source de lumière (140a, 140b) du boîtier de charge après écoulement d'une durée après l'enfichage de la fiche (2) dans le dispositif de couplage (110) du boîtier de charge,
- le dispositif de commande (20) étant réalisé pour permettre d'activer la source de lumière (140a, 140b) pour injecter de la lumière dans la fibre optique (130) lorsque le véhicule est déverrouillé.

8. Véhicule conforme à l'une des revendications 6 et 7,
- dans lequel le dispositif de commande (20) est réalisé pour permettre de déterminer si le véhicule se trouve à l'état prêt à partir,
- le dispositif de commande (20) est réalisé pour désactiver la source de lumière (140a, 140b) du boîtier de charge lorsqu'elle a été activée pour injecter de la lumière dans la fibre optique (130) et que le véhicule se trouve à l'état prêt à partir, ou pour maintenir la source de lumière à l'état désactivé lorsqu'elle se trouve déjà à l'état désactivé et que le véhicule est à l'état prêt à partir.
